# EUROPÄISCHE PATENTSCHRIFT

(11) **EP 3 023 653 B1**
(45) Veröffentlichungstag und Bekanntmachung des Hinweises auf die Patenterteilung: **28.03.2018**
(21) Anmeldenummer: 14194052.8
(22) Anmeldetag: 20.11.2014
(51) Int. Cl.: F16C 19/06, F16C 33/34, F16C 33/64

(54) **Verfahren zur Herstellung eines Wälzlagers**
Method for manufacturing a roller bearing
Procédé de fabrication d'un palier de roulement

(43) Veröffentlichungstag der Anmeldung: 25.05.2016
(73) Patentinhaber: Siemens Aktiengesellschaft, 80333 München (DE)
(72) Erfinder: Schnapp, Wolfgang, 96179 Mürsbach (DE)

(56) Entgegenhaltungen:
- EP-A1- 2 211 067
- WO-A1-01/12359
- US-A1- 2012 269 476

## Beschreibung

Die Erfindung betrifft ein Verfahren zur Herstellung eines Wälzlagers und ein Wälzlager, sowie dessen Anwendung.

Wälzlager sind Lager, bei denen zwischen einem Innenring und einem Außenring rollende Körper den Reibungswiderstand verringern. Sie dienen als Fixierung von Achsen und Wellen, beispielsweise von Läufern rotatorischer dynamoelektrischer Maschinen.

Je nach Bauform der Wälzlager sollen dabei radiale und/oder axiale Kräfte der rotatorischen dynamoelektrischen Maschine aufgenommen werden und gleichzeitig die Rotation der Welle und/oder der auf der Welle gelagerten Bauteile, wie z.B. des Läufers ermöglichen. Zwischen den Hauptkomponenten eines Wälzlagers wie Innenring/Außenring und den Wälzkörpern tritt dabei hauptsächlich Rollreibung auf.

Der elektrische Leistungsaustausch im Betrieb rotatorischer dynamoelektrischen Maschinen mit einem übergeordneten Netz erfolgt bei einer Vielzahl von Maschinen durch Stromrichter. Die dabei auftretenden Lagerströme können u.a. durch Hybridlager vermieden werden.

Bei Hybridlagern weisen die Ringe und der Wälzkörper unterschiedliche Materialien auf, insbesondere sind Innen- und Außenring aus Wälzlagerstahl, Zylinderrollen, also die Wälzkörper, aus Keramik. Diese Zylinderrollen werden bisher einzeln gesintert und anschließend stirnseitig und umfangsseitig bearbeitet. Dabei wird eine Profilierung auf der Umfangsseite der Zylinderrollen erzeugt, die der Vermeidung von Kantenspannungen dient. Das Sintern der einzelnen Zylinderrollen und anschließende Umfangsschleifen dieser Rollen mit Konturenerzeugung ist sehr kostenintensiv.

Aus der US 2012/0269476 A1 ist ein Wälzlager mit Wälzkörpern bekannt, wobei durch Einstichschleifen auf den Laufbahnen der Wälzkörpern Innen- und Außenring eine profilierte Laufbahngeometrie erzeugt wird, und bei Zusammensetzen der Wälzkörper Innen- und Außenring ein Wälzlager geschaffen wird. Aus der DE 10 2010 050 689 A1 ist ein Verfahren zur Herstellung eines keramischen Walzkörpers bekannt, wobei der keramische Grünling als abgelängter Teil eines Extrusionsstrangs bereitgestellt wird. Ein Sintervorgang und geringe mechanische Nacharbeitung der einzelnen Walzkörpern ist danach erforderlich. Aus der WO 01/12359 A1 ist ein Verfahren zur Herstellung von Nitinol-Lagern bekannt.

Ausgehend davon liegt der Erfindung die Aufgabe zugrunde, Wälzlager, insbesondere Rollenlager vergleichsweise weniger kostenintensiv herzustellen, um vor allem bei Anwendungen mit vergleichsweise geringen Axialbelastungen, wie z.B. kleineren rotatorischen dynamoelektrischen Maschinen, kostengünstige Hybrid-Wälzlager bereitstellen zu können.

Die Lösung der gestellten Aufgabe gelingt durch ein Verfahren zur Herstellung eines Wälzlagers mit Wälzkörpern, einem Innen- und einem Außenring durch folgende Schritte:
- Profile aus keramischen Material werden als Fließpressprofil hergestellt,
- die Profile werden durch spitzenloses Rundschleifen geschliffen,
- einzelne Profillängen werden in vorgebbaren Längen vom Profil abgetrennt, um Wälzkörper zu erhalten,
- durch Einstechschleifen wird auf den Laufbahnen der Wälzkörper an Innen- und Außenring eine endprofilierte Laufbahngeometrie erzeugt,
- zusammensetzen der Wälzkörper, Innen- und Außenring zu einem Wälzlager.

Die Lösung der gestellten Aufgabe gelingt auch durch eine dynamoelektrische Maschine mit zwei Lagern, wobei zumindest ein Lager als ein Loslager ausgebildet ist, das zumindest durch folgende Schritte hergestellt wurde:
- Profile aus keramischen Material werden als Fließpressprofil hergestellt,
- die Profile werden durch spitzenloses Rundschleifen geschliffen,
- einzelne Profillängen werden in vorgebbaren Längen vom Profil abgetrennt, um Wälzkörper zu erhalten,
- durch Einstechschleifen wird auf den Laufbahnen der Wälzkörper an Innen- und Außenring eine endprofilierte Laufbahngeometrie erzeugt,
- zusammensetzen der Wälzkörper, Innen- und Außenring zu einem Wälzlager.

Vorteilhafterweise werden die Wälzkörper als Rollenkörper, insbesondere Zylinderrollen durch ein Fließpressprofilen hergestellt.

Anschließend wird die Oberfläche dieser durch Fließpressprofile hergestellten Profile, insbesondere Rollen mittels spitzenlosem Rundschleifen - also centerless - umfangsseitig geschliffen, dabei sind die Profile, insbesondere Rollen herstellungsbedingt nicht eingespannt.

Anschließend werden die Profile, insbesondere Rollen auf vorgegebene Profillängen, also die notwendige axiale Länge des Rollenkörpers abgetrennt. Dies geschieht vorteilhafterweise durch Abstechen in Form von Abdrehen oder Schleifen. Dabei erhält man nunmehr kostengünstige Wälzkörper, insbesondere Rollenkörper oder Zylinderrollen, die zwar keine Profilierung ihrer Umfangsflächen und keine axial geschliffenen Flächen aufweisen, jedoch einfach herzustellen sind. Die Profile also die Rollen- oder Wälzkörper können ebenso als Nadel,- Kegel,- oder Tonnenrolle ausgeführt sein.

Schließlich können die Kanten der Rollen optional verrundet werden, was entweder als zusätzlicher Arbeitsschritt oder bereits beim Abstechen erfolgen kann.

Die Profile und damit die Rollenkörper können dabei als Vollprofile oder Hohlprofile ausgeführt sein. Vollprofile werden nunmehr dadurch geschaffen, dass der Werkstoff, also das keramische Material in eine Richtung beispielsweise durch eine Matrix fließt. Um Hohlprofile zu schaffen wird ergänzend zu dem bestehenden Fließpressverfahren, beispielsweise ein Stempel entgegen der Fließrichtung bewegt oder zumindest gehalten.

Insbesondere Zylinderrollenlager können erfindungsgemäß als Los-, Fest- und Stützlager ausgeführt werden. Festlager nehmen dabei neben hohen radialen Kräften auch axiale Kräfte in beide Richtungen auf. Stützlager nehmen neben hohen radialen Kräften auch axiale Kräfte einer Richtung auf und können somit Wellen in einer Richtung axial führen, in der anderen axialen Richtung wirken sie demnach als Loslager.

Die Profilierung des Wälzlagers findet nunmehr erfindungsgemäß auf den Laufbahngeometrien der Innen- und Außenlaufbahn von Innen- und Außenring statt. Dabei können gewisse Laufbahngeometrien, wie z.B. ballig, zylindrisch/ballig oder logarithmisch hergestellt werden. Durch diese Gestaltung werden Lastspitzen an den Rollenenden der Wälzkörper beeinflusst und können somit durch den Herstellungsprozess bewusst ausgewählt und eingestellt werden.

Innen- und/oder Außenring des Wälzlagers wird geschmiedet oder alternativ dazu von einem Rohrmaterial abgestochen.

Anschließend werden die Innen- und/oder Außenring des Wälzlagers zum Teil in verschiedenen Aufspannungen auf Maß gedreht. Nach dem Härten und Anlassen werden Innen- und/oder Außenring des Wälzlagers geschliffen. Dabei werden die äußeren Stirnseiten und der Innendurchmesser geschliffen. Ebenso wird die Laufbahn der Wälzkörper geschliffen, die durch diesen Schleifvorgang ihre Gestaltung, also ballig, zylindrisch/ ballig oder logarithmisch erhält.

Optional kann die Laufbahn des Innen- und/oder Außenring des Wälzlagers poliert werden, was zu einer weiteren Glättung und einer Verbesserung der Schmierung bzw. Reduzierung der Reibung führt.

Die axiale Belastbarkeit eines Zylinderrollenlagers hängt u.a. von der Größe der Gleitflächen zwischen den Borden - soweit vorhanden - an Innen- und/oder Außenring und den Stirnflächen der Wälzkörper ab.

Die Zylinderrollenlager können ebenfalls mit Käfigen für die Wälzkörper ausgeführt sein, die dann vorteilhafterweise eine Montageeinheit bilden. Dies reduziert den Montageaufwand des Wälzlagers.
Die Bordinnenseiten von Außen- und Innenring sind nur überdreht, damit ist keine volle Übertragung der Axialkräfte über die Wälzkörper möglich. Insbesondere bei einem Einsatz derartiger Wälzlager bei rotatorischen dynamoelektrischen Maschinen ist dies auch nicht nötig, da diese Wälzlager, insbesondere als Loslager einsetzbar sind.

Damit lassen sich in einfacher Art und Weise auch für kleinere rotatorische Elektromotoren kostengünstige Hybridlager herstellen, welche zumindest die gleiche Leistungsfähigkeit bisheriger Lösungen aufweisen.

Diese Wälzlager sind nunmehr kostengünstig herzustellen, sind als Loslager bei rotatorischen dynamoelektrischen Maschinen einsetzbar und halten im Betrieb rotatorischen dynamoelektrischen Maschinen an Stromrichtern auftretende Lagerströme ab Keramische Profile, insbesondere Rollen dieser Wälzlager sind somit elektrisch nicht leitend und sind somit bei lagerstromgefährdeten Einsatzgebieten rotatorischen dynamoelektrischen Maschinen bei industriellem Einsatz in Werkzeugmaschinen oder bei Fahrzeugantrieben wie E-cars und Schienenfahrzeugen besonders geeignet.

Grundsätzlich der erfinderische Gedanke auf die Herstellung sämtlicher Rollenlager anwendbar. Es wird sich jedoch eine maschinenbedingte Limitierung des Fließpressverfahrens bei den Durchmessern der Profile bzw. der Rollen einstellen.

Die Erfindung sowie eine Ausführung der Erfindung wird in einem prinzipiell dargestellten Ausführungsbeispiel einer Anwendung näher erläutert.

Die FIG zeigt im prinzipiellen Längsschnitt eine rotatorische dynamoelektrische Maschine 1, die in einem Gehäuse 2 angeordnet ist. In diesem Gehäuse 2 befindet sich ein Statorblechpaket 7, in dessen axial verlaufenden Nuten ein Wicklungssystem angeordnet ist, das an den Stirnseiten des Statorblechpakets 7 Wickelköpfe 6 ausbildet. Auf die Welle 8 aufgeschrumpft oder zumindest drehfest mit einer Welle 8 verbunden ist das Rotorblechpaket 9, das durch elektromagnetische Wechselwirkung über einen Luftspalt 11 der dynamoelektrischen Maschine 1 mit dem Stator eine Rotation der Welle 8 erzeugt.

Die Welle 8 ist durch ein Festlager 10 und ein Loslager 5 radial und axial positioniert. Dabei führt immer mindestens ein Lagerring, also entweder der Innenring oder der Außenring die Wälzkörper, also die Rollen zwischen festen Borden. Dieser Ring bildet dann zusammen mit einem Käfig und den Rollen eine Montageeinheit. Der andere Lagerring kann z.B. von der Welle 8 abgezogen werden. Innenring und Außenring lassen sich somit getrennt ein- und ausbauen.

Das Loslager 5 ist in einem Lagerschild 3 angeordnet. Das Festlager 10 ist in einem Lagerschild 4 angeordnet, die in dieser Ausführung bündig mit dem Gehäuse 2 abschließen. Bei thermischer Ausdehnung der Welle 8 gestattet das Loslager 5 nunmehr ein axiales Mitwandern der Welle 8 innerhalb des Lagerschildes 3 ohne mechanische Spannungen aufgrund von thermischer Ausdehnung zu generieren.

Die Wälzkörper dieses Loslagers 5 sind im Wesentlichen zylinderförmig und sind dabei durch einfache Art und Weise in einem Fließpressverfahren hergestellt, wobei eine Profilierung der Kontaktfläche zwischen Rollenkörper und Laufbahnen nicht auf der Oberfläche des zylinderförmigen Rollenkörpers stattfindet, sondern lediglich auf den Laufbahnen von Innen- und/oder Außenring.

Die Erfindung ist nicht nur auf diese einfachen Zylinderrollenlager beschränkt. Vielmehr ist das erfindungsgemäße Verfahren beispielsweise auch für ein- und zweireihige Zylinderrollenlager, anwendbar. Ebenso können die Wälzkörper je nach späterer radialer Belastung in ihrer Anwendung hohl ausgeführt sein. Folgende Wälzkörper lassen sich ebenfalls durch das erfinderische Verfahren herstellen: Kugelrollen, Kegelrollen, symmetrische, asymmetrische und ballige Tonnenrollen. Je nachdem ist der Vorgang des Schleifens mehr oder weniger aufwändig.

Ebenso eignet sich der erfinderische Gedanke des Verfahrens zur Herstellung kostengünstiger Wälzlager auch für alle Arten Nadellagern, die in erster Linie für höhere Radiallasten vorgesehen sind.

Derartig hergestellte Wälzlager 5 eignen sich neben den oben genannten Anwendungsgebieten, wie Einsatzgebieten rotatorischen dynamoelektrischen Maschinen 1 bei industriellem Einsatz z.B. in Werkzeugmaschinen oder bei Fahrzeugantrieben in E-cars oder Schienenfahrzeugen, insbesondere für Anwendungen deren Produkt von Drehzahl (in Umdrehungen pro Minute) und Durchmesser (in Millimetern) kleiner eine Million beträgt. (In Formeln: n x D < 1x10⁶ mit "n" in U/min und "D" in mm).

Damit sind bei rotatorischen dynamoelektrischen Maschinen 1 die Leistungsklassen von einigen Kilowatt bis zu mehreren Megawatt umfasst.

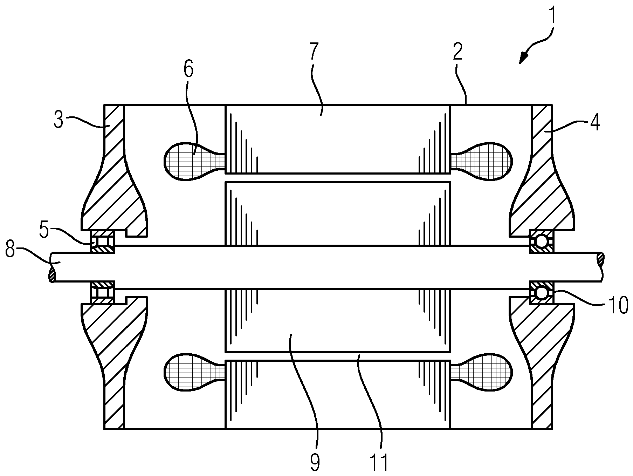

## Patentansprüche

1. Verfahren zur Herstellung eines Wälzlagers (5,10) mit Wälzkörpern, einem Innen- und einem Außenring durch folgende Schritte:
- durch Einstechschleifen wird auf den Laufbahnen der Wälzkörper an Innen- und Außenring eine endprofilierte Laufbahngeometrie erzeugt,
- Profile aus keramischen Material werden als Fließpressprofil hergestellt,
- die Profile werden durch spitzenloses Rundschleifen geschliffen,
- einzelne Profillängen werden in vorgebbaren Längen vom Profil abgetrennt, um Wälzkörper zu erhalten,
- zusammensetzen der Wälzkörper, Innen- und Außenring zu einem Wälzlager (5,10).

2. Verfahren zur Herstellung eines Wälzlagers (5,10) nach Anspruch 1, **dadurch gekennzeichnet, dass** die Profile als Voll- oder Hohlprofile ausgebildet werden.

3. Verfahren zur Herstellung eines Wälzlagers (5,10) nach Anspruch 1, **dadurch gekennzeichnet, dass** die Profillängen als Rollen ausgebildet werden.

4. Verfahren zur Herstellung eines Wälzlagers (5,10) nach einem der vorhergehenden Ansprüche, **dadurch gekennzeichnet, dass** die Laufbahngeometrie von Innen- und/oder Außenring ballig, zylindrisch/ballig oder logarithmisch ausgestaltet wird.

5. Wälzlager hergestellt nach einem der vorhergehenden Ansprüche mit zumindest:
- durch einen Fließpressprozess hergestellte und geschliffene Wälzkörper,
- mit zumindest einem geschliffenen Innen- und/oder Außenring.

6. Verwendung eines Wälzlagers (5,10) nach einem der vorherigen Ansprüche bei der Lagerung einer Welle (8) einer rotatorischen dynamoelektrischen Maschine (1), wobei das Wälzlager vorzugsweise als Loslager (5) eingesetzt ist.

7. Dynamoelektrische Maschine (1) mit zwei Lagern, wobei zumindest ein Lager ein Loslager (5) nach einem oder mehreren der Ansprüche 1 bis 5 ist.

## Claims

1. Method for manufacturing a roller bearing (5,10) having rolling elements, and an inner and an outer ring, by the following steps:
- an end-profiled raceway geometry is produced on the raceways of the rolling elements on the inner and outer ring by plunge grinding,
- profiles made from ceramic material are produced as an extruded profile,
- the profiles are ground by centreless grinding,
- individual profile lengths are separated in predetermined lengths from the profile, to obtain rolling elements,
- assembly of the rolling elements, inner and outer ring to form a roller bearing (5,10).

2. Method for manufacturing a roller bearing (5,10) according to claim 1, **characterised in that** the profiles are embodied as solid or hollow profiles.

3. Method for manufacturing a roller bearing (5,10) according to claim 1, **characterised in that** the profile lengths are embodied as rollers.

4. Method for manufacturing a roller bearing (5,10) according to one of the preceding claims, **characterised in that** the raceway geometry of inner and/or outer ring is configured spherically, cylindrically/spherically or logarithmically.

5. Roller bearing manufactured according to one of the preceding claims, having at least:
- roller elements manufactured and ground by an extrusion process,
- having at least one ground inner and/or outer ring.

6. Use of a roller bearing (5,10) according to one of the preceding claims when mounting a shaft (8) of a rotatory dynamo-electric machine (1), wherein the roller bearing is preferably used as a non-locating bearing (5).

7. Dynamo-electric machine (1) having two bearings, wherein at least one bearing is a non-locating bearing (5) according to one or more of claims 1 to 5.

## Revendications

1. Procédé de fabrication d'un palier (5, 10) à roulement ayant des corps de roulement, une bague intérieure et une bague extérieure, par les stades suivants :
- par rectification en plongée, on produit, sur les pistes de roulement des corps de roulement sur la bague intérieure et la bague extérieure, une géométrie de piste de roulement à profilé d'extrémité,
- on produit les profilés en matériau céramique, sous la forme d'un profilé formé par extrusion,
- on rectifie les profilés par rectification d'une surface cylindrique sans pointe,
- on sépare des longueurs individuelles de profilé en des longueurs pouvant être données à l'avance de profilé pour obtenir des corps de roulement,
- on assemble les corps de roulement, la bague intérieure et la bague extérieure en un palier (5, 10) à roulement.

2. Procédé de fabrication d'un palier (5, 10) à roulement suivant la revendication 1, **caractérisé en ce que** l'on constitue les profilés sous la forme de profilés pleins ou de profilés creux.

3. Procédé de fabrication d'un palier (5, 10) à roulement suivant la revendication 1, **caractérisé en ce que** l'on forme les longueurs de profilés sous la forme de rouleaux.

4. Procédé de fabrication d'un palier (5, 10) à roulement suivant l'une des revendications précédentes, **caractérisé en ce que** l'on conforme la géométrie de piste de roulement de la bague intérieure et/ou de la bague extérieure, de manière bombée, cylindrique/bombée ou logarithmique.

5. Palier à roulement fabriqué suivant l'une des revendications précédentes, comprenant au moins :
- des corps de roulement fabriqués par une opération d'extrusion et rectifiés,
- comprenant au moins une bague intérieure et/ou extérieure rectifiée.

6. Utilisation d'un palier (5, 10) à roulement suivant l'une des revendications précédentes, pour le montage d'un arbre (8) d'une machine (1) dynamoélectrique tournante, le palier à roulement étant utilisé de préférence sous la forme d'un palier (5) libre.

7. Machine (1) dynamoélectrique ayant deux paliers, dans laquelle au moins un palier est un palier (5) libre suivant l'une ou plusieurs des revendications 1 à 5.
